# EUROPEAN PATENT SPECIFICATION

(11) **EP 1 517 567 B1**
(45) Date of publication and mention of the grant of the patent: **19.12.2007**
(21) Application number: 04103801.9
(22) Date of filing: 06.08.2004
(51) Int. Cl.: H04Q 7/28

(54) **Mobile communications terminal and method**
Mobiles Kommunikationsendgerät und Verfahren
Terminal mobile de communication et procédé

(30) Priority: 18.09.2003 GB 0321808
(43) Date of publication of application: 23.03.2005
(73) Proprietor: MOTOROLA, INC., Schaumburg, IL 60196 (US)
(72) Inventor: BAR, Eitan, 67899, Tel Aviv (IL); BALLA, Chantal, 67899, Tel Aviv (IL); DORY, Dan, 67899, Tel Aviv (IL); SUPLIN, Anatoliy, 67899, Tel Aviv (IL); OFIR, Gabi, 67899, Tel Aviv (IL)
(74) Representative: McCormack, Derek James

(56) References cited:
- GB-A- 2 287 612
- US-A1- 2002 037 715
- US-B1- 6 317 595

## Description

### FIELD OF THE INVENTION

The present invention relates to mobile communications terminals and methods.

### BACKGROUND OF THE INVENTION

Mobile radio communications systems, for example cellular telephony or mobile radio communications systems, typically provide for radio telecommunication links to be arranged between a plurality of subscriber terminals, often referred to in the art as mobile stations (MSs). The term 'mobile station' ('MS') generally includes both hand-portable and vehicular mounted radio units, radiotelephones and like radio communications units.

Mobile radio communications systems are distinguished from fixed communications systems, such as the public switched telephone networks (PSTN), principally in that mobile stations can move in geographical location to accompany their user and in doing so encounter varying radio propagation environments.

Mobile radio communications systems and mobile stations used in them may operate in one of two main modes, namely a TMO (trunked mode of operation) and a DMO (direct mode of operation). TMO communications use the fixed infrastructure supplied by the system operator, e.g. base transceiver stations (BTSs) arranged in a network, to deliver communications from one terminal, e.g. the MS of one user or operator, to that of one or more others terminals, e.g. the MS of one or more other users. In contrast, DMO is a method that provides the capability of direct communication between each of two or more MSs without any associated operator's system fixed network infrastructure. It is known in the art, however, that DMO communications may pass through repeaters which are essentially unintelligent terminals designed only to pass on the communication signal not to apply any intelligent processing such as routeing. Some MSs may be dual mode operating using either TMO or DMO as appropriate.

In the field of this invention, mobile communications systems are known which operate according to standard industry protocols. For example, systems operating according to the TETRA (TErrestrial Trunked Radio) standards are known. The TETRA standards are operating protocols which have been defined by the European Telecommunications Standards Institute (ETSI). For example, systems for use by police and public safety services are often designed in accordance with TETRA standards. TETRA standards allow operation of mobile stations alternatively in TMO and DMO as appropriate. In general, DMO and TMO have different communication protocols and this applies particularly with regard to TETRA communication protocols. The present invention is useful in (but not exclusively in) TETRA systems, particularly such systems which provide DMO communications.

TETRA communications terminals in TMO operate according to a TDMA (time division multiple access) protocol allowing four different channels on the same RF carrier. This is provided by a synchronised signal timing system consisting of consecutive time slots four of which make up a frame of duration 56.667ms. Eighteen consecutive frames make up a multiframe of duration 1.02s.

TETRA MSs in DMO operate according to the same timing system as for TMO but using only two specified time slots per frame.

Frequency Efficient Mode (FEM) is a communication method employed in TETRA DMO. This allows the RF capacity of a single frequency to be doubled, i.e. two independent services may use the same carrier frequency concurrently, without disturbing each other, although each service is aware of the other. The first channel to be used on a particular frequency in FEM is referred to as the primary channel, channel 'A', whereas the other channel is referred to as channel 'B'.

In contrast, in TETRA DMO 'Normal Mode', use of only one channel on a given frequency is supported.

When a call between individuals is being conducted in DMO, a situation may arise where a user not involved in the call ('User 3') wishes to call one of the individuals in the call ('User 1' or 'User 2'). Under the current protocol defined by the TETRA standard, User 3 may either pre-empt the ongoing call or wait until it ends.

A pre-emption procedure, if successful, will result in abandoning of the ongoing individual call, which may be undesirable and disturbing for the parties involved. In addition this procedure will not be started at all for a call which does not have a priority higher than that of the ongoing call.

Furthermore, for a group call in DMO it may be that an individual, who is not taking part in the group call, User 3, may wish to conduct a private call with the user of the current master radio of the group, say User 1. Again, unless the desired call is of higher priority than the ongoing call there is no currently available procedure allowing it to be carried out.

US 2002/037715-A describes handset-to-handset wireless communication. A call waiting service to a target handset in a direct mode is described. The service requires a 'registry channel' to verify that the target handset is within range, to send status information and to initiate the service. Operation in accordance with the invention to be described is not contemplated by this reference.

GB-A-2,287,612 describes a dual monitoring function of a mobile station to monitor for signals sent in a trunked mode or in a direct mode. Operation in accordance with the invention to be described is not contemplated by this reference.

### SUMMARY OF THE INVENTION

In accordance with a first aspect of the present invention, there is provided a mobile station in accordance with claim 1 of the accompanying claims.

In accordance with a second aspect of the present invention, there is provided a method in accordance with claim 18 of the accompanying claims.

In this specification the expression 'call' between two or more radios or other mobile stations or wireless terminals is used. This expression indicates the communication by wireless of information between the users of the respective terminals. The information may be speech information as in a telephone conversation, although it can be information in one or more other forms which may be communicated by wireless, such as data information, e.g. commonly referred to as 'text messages', or picture or video information.

The invention beneficially provides services to a user in DMO to indicate that there is a 'call waiting', or that a 'call back' or 'call forward' action is required, and to provide operational procedures for these services. Such services allowed by the invention do not exist currently for private or for group calls in DMO. Hence, the invention beneficially adds more flexibility and options to the user of wireless communication terminal when operating in DMO, especially TETRA DMO.

Embodiments of the present invention will now be described by way of example only, with reference to the accompanying drawings, in which:

### Brief Description of the accompanying drawings

FIG. 1 is a schematic illustration of an arrangement of mobile radios some of which are participating in direct mode communication.
FIG. 2 is a schematic block circuit diagram of one of the radios in the arrangement of FIG.1.

### Description of embodiments of the invention

### 1. Call waiting procedure

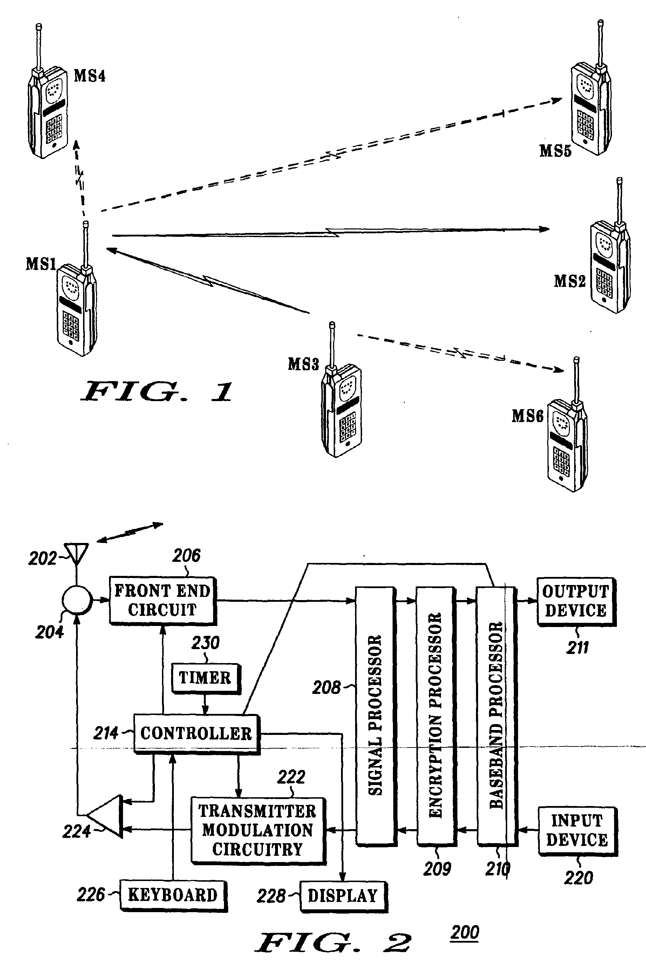

Several radios operational in accordance with the TETRA DMO standard procedures are shown in FIG. 1. A first radio, MS1, is taking part in a DMO call with a second radio, MS2. The radios MS1 and MS2 operate in accordance with the TETRA DMO frequency efficient mode on a first channel A. There is a second channel B available on the same RF carrier frequency. The radio MS1 initiated the call and is therefore the master radio in the current call. Assume that a user of a third radio, MS3, capable of operating in TETRA DMO frequency efficient mode, wishes to speak to the user of one of the radios MS1, MS2. Since MS3 has to operate on the same RF carrier, the current required standard procedures when conducted by MS3, will result in detecting that the target radio, MS1 or MS2 as appropriate, is already participating in a private call. This procedure is known per se for monitoring of the messages sent by the master radio MS1 on the channel A. The radio MS3 will detect that its required target radio for the private call is already involved in another individual call. The radio MS3 then detects whether the second channel B on the RF carrier is free. In order to do this the radio MS3 has to monitor the channel B and look for any substantial RF activity in the time slots which are allocated to the channel B. Any detected activity indicates that the channel B is not free. If the channel is detected by the MS3 as free then the radio MS3 begins transmitting on both slots of the free channel B a new dedicated short PDU (Protocol Data Unit) message addressed to the target individual radio, MS1 or MS2 (MS1 is shown as the target radio in FIG.1). In addition, an audible tone is provided and/or a visual message is displayed to the user of the radio MS3 to indicate that a response from the required target radio is awaited. The 'waiting time' may be a finite time controlled using a special timer in the radio MS3.

A similar procedure can be applied where the radio MS1 as master radio is participating in a group call with the radio MS2 and other radios MS4 and MS5. In this case, the user of the radio MS3, who is not participating in the ongoing group call, wishes to initiate a private call with the user of the master radio MS1.

Each of the radios MS1 and MS2 taking part in the ongoing private call on channel A or B (MS1 master MS only in case of a group call) in TETRA DMO frequency efficient mode monitors the other channel B or A as appropriate, during the call for a request message (PDU message) addressed to itself sent on the channel A or B by another radio.

In the prior art it is known for the master MS1 only, operating on one channel, say channel B, to monitor the other channel, channel A periodically (e.g. at a given slot in a given frame at multiframe intervals) and only for synchronisation information (i.e. deriving the right channel timing for channel B from a master radio operating on channel A). The monitoring of the additional channel A or B (depending upon the current channel on which the call is carried out) by the radio MS1 (in the case of a group call) or both MS1 and MS2 (in the case of a private call) is carried out in the embodiment of the invention for detection of a request message in addition to monitoring of the channel for synchronisation information.

When the radio MS1 or MS2 as appropriate, detects the request message addressed to itself sent by the radio MS3, it provides an information message to its user, e.g. again via an audible tone and/or a displayed message, e.g. that a call from MS3 is waiting. If the user desires to accept this waiting call then he/she indicates this by entering an acceptance message into the radio in a known manner, e.g. following a displayed prompt by pressing a button or key in a user interface. The acceptance message is recognised by a controller within the radio. The controller of the radio either releases the current call or suspends the current call. The user may be given the option to choose whether to release or suspend the call, e.g. by a displayed message and entry of a further response message in the radio from the user.

Where the current call is released, the master radio MS1 may then use a known procedure. Were the called radio, MS1 or MS2, suspends the ongoing call the following procedure may be employed.

If Master MS1 is to suspend the ongoing call it may issue a 'DM-TX-CEASED' PDU message (which will also forbid pre-emption) with a new 'cease-cause' value indicating that the call is being suspended owing to answering an awaiting call. A 'DM-TX-CEASED' PDU message is defined in the TETRA standard. A 'cease-cause' value is a recognisable digital value included in the 'DM-TX-CEASE' message, indicating the cause, which led to the issuing of the message. A controller within the radio MS2 receives and recognises this message and in response maintains the channel A (for a pre-defined time) by sending an individually addressed 'DM-RESERVED' PDU to the radio MS1. This also disables pre-emption. The radio MS1 will be able to use a known changeover procedure after change back to its original channel A when its contemplated call with radio MS3 has finished. After issuing the 'DM-TX-CEASED' message, the radio MS1 changes its working channel to channel B as being used by the radio MS3. The radio MS1 responds to the request PDU from the radio MS3 with a further dedicated PDU response message to indicate that the call request from the radio MS3 is accepted. The new private call between the radios MS3 and MS1 then proceeds in a known manner.

If the slave radio MS2 in the original ongoing call is contacted by sending of the call request message from the radio MS3 on channel B, and the radio MS2 is to suspend the ongoing call, a controller within the radio MS2 may issue a new dedicated PDU message on channel A addressed to the radio MS1 declaring this intention to suspend to the call with the radio MS1. The controller within the radio MS1 receives and recognises this message and responds by issuing a 'DM-CEASED' PDU (which will also forbid pre-emption) with a new 'cease-cause' value to indicate the reason for the suspension, followed by a 'DM-RESERVED' PDU message (effective for a pre-defined time and which disables pre-emption) individually addressed to the radio MS2. The controller of the radio MS2 receives and recognises this message and, in response, allows the radio MS2 to leave the original ongoing call. The radio MS2 changes its working channel to channel B as being used by the radio MS3. The radio MS2 then responds to the request PDU message from the radio MS3 with a further dedicated PDU message to indicate that the call request from the radio MS3 is accepted. The new private call between the radios MS3 and MS2 then proceeds in a known manner.

When the radio MS3 has sent a call request message on channel B and is still waiting for a response, the user of radio MS3 may wish to end waiting manually by using a pre-defined procedure or the radio MS3 may automatically end waiting. In both cases the radio MS3 leaves the channel B and indicates to the user that the call request has been terminated in one of the ways described earlier. The radio MS3 may a so generate and send a PDU message to indicate to the addressed radio (MS1 or MS2) that the requesting radio MS3 is no longer waiting.

The procedure described above may be implemented also in a manner, which is less wasteful of channel resources, as follows:

Both radios to take part in the new call, and MS1 or MS3 and MS2, may change to the original channel of the ongoing call, channel A, immediately following the transmission of the response PDU message indicating that MS1 or MS2 as appropriate will join MS3 in the new call. In this case, the radio in the original call which is not to take part in the new call with MS3 will remain in an 'IDLE' state while the channel 1 is in an 'OCCUPIED' state. Messages generated in channel A by the radio which is joining MS3 in the call are now individually addressed to the radio MS3 so the other MS is able to maintain the channel while it is busy with a call not directed to it.

Upon a user request, the user of radio MS1 may wish to continue in the call with radio MS2. This can be indicated by using a pre-defined procedure at the radio MS1. In response, transmission of the further 'DMAC-SYNC' and 'DMAC-DATA' PDU messages by the radio MS1 will be directed to MS2. It is to be noted that the 'DMAC-SYNC' PDU is one of two data message types, namely a first type sent in a synchronisation burst, which carries all the necessary data for a receiver in the radio to which the message is addressed to synchronise to the exact timing of the transmitting radio. The 'DMAC-DATA' PDU message is the second PDU type, namely one that is enclosed in a normal burst, and which carries either traffic data or signalling (control) information addressed to the individual address of the radio MS2.

A similar procedure may be used to enable a call-waiting chaining mechanism for more than one party in addition to the user of radio MS3 to try to establish a call with one of the parties in the ongoing call. The radio, MS1 or MS2, to which the call request is addressed, may be configured so that the user can receive a message, e.g. a visually displayed message, to indicate which parties (which radios) the multiple waiting call requests are from. The radio may be operable to allow the user to select which of the waiting calls to accept. For example, the user may be able to make such a selection using a soft key (image of a button, key etc) provided on a display of the radio. The radio of each of the waiting parties may include a timer limiting its waiting time. If the wait by that party ends, the radio of that party may generate and send a PDU message to indicate to the addressed radio that the requesting radio is no longer waiting.

Frequency efficient mode is not mandatory in TETRA DMO communications and a call-waiting mechanism may be applied for normal-mode TETRA DMO working as well as follows using the TETRA TDMA timing protocols specified for DMO:

'Bitmap' slots are time slots exclusively allocated to the slave (e.g. MS2 in the above example) as well as for other radios of other members of a group not participating in the call working on the same channel in a DMO call in accordance with the TETRA DMO timing system. These slots are allocated for transmitting 'Changeover Request' messages to the master radio (MS1 in the example above) during the 'RESERVED' channel state from slave radios or pre-emption requests to evacuate the channel from other group members working on the channel. Slot 3 of the 'bitmap' slots may be employed in the following manner: Slot 3 in frames 1, 4, 7 and 13 will serve for 'call waiting requests' addressed to the slave radio, MS2. Slot 3 in frames 9, 10, 15 and 16 will serve for responses of the slave radio, MS2 allowing the latter two consecutive frames of response. The master radio MS1 shall continue responding to MSs applying to it with call waiting requests in slot 1 (using frame stealing - if during occupation) and slot 3 if not currently use for requests or responses. A random access mechanism may be also applied in order to handle a scenario where a response is not received during the pre-defined time and more than a single MS may have applied call the master radio with a call waiting request. Timers in the radios will be set with respect to the likely suggested period for 'answer' opportunities. (Since the service is not of immediate priority the length of such periods can exceed the random access period set for the current pre-emption/changeover requests). This regime of call waiting request opportunities and call waiting response opportunities and timers can be used both for occupation and reservation periods of the current ongoing call.

### Call back procedure

In the situation described above in connection with the 'call waiting procedure' the user of the radio MS3 wishes to have a call with the user of one of the radios MS1 and MS2 currently engaged in a call in TETRA DMO. In the 'call waiting procedure' the radio MS3 generated a 'request PDU message' indicating that it had a call waiting. Alternatively, or in addition, the radio MS3 may generate and send a call back request using a new dedicated PDU message addressed to the appropriate radio MS1 or MS2 (including the situation where the radio MS1 is currently master in a group call). This message will be transmitted using pre-defined slots in the TETRA DMO TDMA timing sequence. These pre-defined slots may be (i) the pre-emption slots allocated for signalling the Master radio, MS1 in our example, namely slot 3 in frames 2, 5, 8, 11, 14 and 17; and (ii) the unused "bitmap" slots to signal the slave radio, MS2 in our example (and optionally also the master radio MS1); that another call is pending for each.

If the 'bitmap' slots are used for signalling both the master and slave radios, a pre-defined arrangement between the two radios may declare which of these slots is used for signalling each radio.

When the appropriate radio, i.e. the master radio MS1 or the slave radio MS2 taking part in the private call between the two, detects (in its controller) the call back request from the radio MS3, it responds with a new dedicated PDU message, indicating that the request was received. If, for any reason, the request is rejected (e.g. if a maximum number of such requests is permitted and the maximum number has been reached), another form of new dedicated PDU message is used.

If the addressed radio is the master radio MS1 of the current call (group or private call) it transmits its response in a similar manner to that used for responding on pre-emption requests: i.e. the response is sent by stealing slots normally employed for traffic and/or control signalling (e.g. for traffic on slot 1 or synchronisation bursts on slot 3; and using the Frame Count Down ('FDU'), repetition of PDU transmission for reliability purposes, as described in the TETRA standard.

The slave radio MS2 taking part in a private call may send its response message, using slot 3 only (allotted for synchronisation bursts) of those unused slots of the 'bitmap' slots. The FCD mechanism described above may also be used.
A precise mechanism has to be pre-defined allow division of the eight 'bitmap' slots available between requests addressed to the master MS1, requests addressed to the Slave MS2 and responses by the slave MS2. One example of such a mechanism may be as follows:
Slot 3 in frames 1, 4, 7 and 13 serves for requests addressed to the slave radio MS2. Slot 3 in frames 9, 10, 15 and 16 serves for responses of the slave radio MS2 allowing the latter two consecutive frames of response (FCD = 2). The master radio MS1 always responds in slot 1 (using slot stealing if traffic is taking place) and/or in slot 3 if not used for requests or responses. A random access mechanism may be also applied if a response is not received during the pre-defined time. Timers in the radios will be defined with respect to the suggested 'answer' opportunities (since the service is not of immediate priority their length can exceed the random access period set for the current pre-emption/changeover requests). This regime of call back requests opportunities and call back response opportunities and timers can be used both for occupation and reservation periods of the current ongoing call.

When the appropriate radio to which the call back request is addressed receives the call back request, the radio provides an information message to its user, e.g. again via an audible tone and/or a displayed message, e.g. that a call from the radio MS3 has requested a call back. As soon as the ongoing call involving radios MS1 and MS2 (and MS4 and MS5 where a in a group call) ends, the user of the addressed radio may receive a list of all radios that have made call back requests (and optionally also call waiting requests) and will be able to call back each of the radios that made the call back requests in a selected order using standard individual call set-up procedures.

The radio, which received the request to call back the radio MS3 may generate and send to the radio MS3 a PDU message indicating whether its request was received or rejected by the addressed radio.

### Call forwarding procedure

A message is sent by the requesting radio MS3 to the addressed radio MS1 or MS2 as appropriate currently taking part in a DMO call in the manner described earlier for the 'call waiting procedure'. In this case the master radio MS1 (when in a group call) or either the master MS1 or the slave MS2 (when in a private call) can respond by indicating that the call request should be directed to another individual radio or member in a group of radios using a new protocol procedure and new dedicated PDU messages.

Thus, the master radio MS1 or the slave radio MS2 (in a private call), when detecting a call request message from the radio MS3, can respond to the message with a new dedicated PDU message. This is a response message sent to the radio MS3 indicating in the message that the radio MS3 will call a further specified individual or specific member in a group (or that the user should call the further specified individual or group), e.g. indicated in the response message by address number of the radio. This 'forward number' could be a number stored in a memory of the radio (MS1 or MS2) sending the response message, e.g. in its Code-Plug, and/or could be editable by the user, e.g. by the addressed radio displaying a message to its user and the user entering the number. The response message sent back to the radio MS3 may be transmitted several times using the FCD mechanism for reliability purposes.

The response message is sent back to the radio MS3 and a visual message in response is displayed by the radio MS3 to its user. The displayed message indicates that the call is being forwarded and indicates the identity of the target radio(s) that it is being forwarded to. The radio MS3 initiates a new call to the target radio, a radio MS6, on the second channel B on the RF carrier if it is free. The target radio may then be automatically contacted by the radio MS3. No intervention of the user is needed; however the user will be able to stop the forwarding process taking place if he/she does not wish the call to fallow this course by entry of an instruction message into the radio MS3.

The procedure to receive and respond to the call request by the addressed radio MS1 or MS2 currently taking part in a call may be one of the procedures described earlier. Each involves the controller of the addressed radio currently taking part in the call recognising the request message and in response generating and sending a response PDU message to the MS3 to indicate the call forwarding details. Examples of specific procedures which may be used are as follows:
(i) The radio MS3 in DMO frequency efficient mode detects that the addressed radio MS1 or MS2 is currently in a call on channel A and detects that the second channel B is free in the manner described earlier and sends the new PDU message to the addressed radio on channel B.
(ii) A request PDU message is sent by the radio MS3 to the addressed radio MS1 or MS2 in DMO normal mode using the pre-emption slots and/or unused 'bitmap' slots available on the same channel as that on which the call is currently being conducted between the MS1 and the MS2. For example, request messages sent to the radio MS1 or the radio MS2 by the radio MS3 and responses by the addressed radio may be sent in pre-defined slots as follows: Slot 3 in frames 1, 4, 7 and 13 will serve for requests addressed by the radio MS3 to the slave MS2. Slot 3 in frames 9, 10, 15 and 16 will serve for call forwarding messages sent in response by the slave MS2 allowing the latter two consecutive frames of response. New call forwarding PDU messages sent by the master radio MS2 to the service requester radio MS3 are sent in slot 1 (using slot stealing - if sent during traffic period) and slot 3 if not already used for requests or responses. A random access mechanism may be also applied in order to handle a situation where a response is not received during the pre-defined time and more than a single MS may have applied for the master with the call initiating request. Timers will be set with respect to the suggested 'answer' opportunities (since the service is not of immediate priority their length can exceed this used for the current pre-emption/changeover requests). This allocation can be used both for occupation and reservation periods of the current ongoing call.

Referring now to FIG. 2, there is shown a block diagram of a mobile radio unit 200 which is operable as the radio MS1, the radio MS2 or the radio MS3 in the above procedures. The radio 200 may be suitable for operating in a TETRA TMO or DMO depending on the mode selected.

The radio 200 includes an antenna 202 coupled to a duplex filter or circulator 204 that provides isolation between receive and transmit chains within radio 200. The receive chain includes a receiver front-end circuit 206 (effectively providing reception, filtering and intermediate or base-band frequency conversion). The front-end circuit 206 receives signal communications from another terminal, such as another mobile radio. The front-end circuit 206 is serially coupled to a signal processor (generally realised by a digital signal processor, DSP) 208. The signal processor 208 performs signal demodulation, error correction and formatting, and, if appropriate, recovers encrypted information from the received signal. A signal representing the information recovered by the signal processor 208 is serially coupled to an encryption processor 209.

As known in the art, received signals that have been decrypted by the encryption processor 209 are typically input to a baseband processing device 210, which takes the decrypted information received from the encryption processor 209 and formats it in a suitable manner to send to an output device 211, such as a speaker.

In an alternative form of the radio 200, the functions of the signal processor 208 and the baseband processing device 210 may be provided within the same physical device. The function of the encryption processor 209 may also be provided within the same physical device as either the signal processor 208 or the baseband processing function 210, or both.

A controller 214 controls the information flow and recognition and generation of control signals and the operational state of processors within the radio 200.

As regards the transmit chain of the radio 200 112, this essentially includes an input device 220, such as a microphone, coupled in series through the baseband processor 210, the encryption processor 209, the signal processor 208, transmitter/modulation circuitry 222 and a power amplifier 224. The processors 208, 210, transmitter/modulation circuitry 222 and the power amplifier 224 are operationally responsive to the controller 214, with an output from the power amplifier 224 coupled to the duplex filter or circulator 204 in a manner known in the art.

The transmit chain in the radio 200 takes the baseband signal from input device 220 and converts it into information that can be encrypted by the encryption processor 209. The encrypted information provided as an output by the encryption processor 209 is passed to the signal processor 208 where it is encoded for transmission by the transmit/modulation circuitry 222 and power amplifier 224.

The radio 200 includes a keyboard 226 operationally coupled to the controller 214 for providing user input instruction messages to the controller 214 in a known manner and a display operationally coupled to the controller to display information to the user in a known manner. A timer 230 controls timing operations of the radio 200 by the controller 214.

## Claims

1. A mobile station (MS1) for conducting DMO, direct mode of operation, wireless communications with other wireless terminals and operable when participating in a call using a DMO channel with one or more other mobile stations (MS2) to monitor for a message sent to the mobile station by a further wireless terminal (MS3) not participating in the call requesting the mobile station (MS1) to participate in a DMO call with the further wireless terminal (MS3), **characterised in that** the mobile station (MS1) is operable to participate in a call on a first DMO channel A comprising pre-defined time slots of a timing sequence on a DMO carrier frequency, and to monitor a second DMO channel B comprising other time slots of the timing sequence on the same carrier frequency for a data message sent by DMO communication to the mobile station (MS1) by the further wireless terminal (MS3) and, where such a data message is detected, to receive and recognise the message.

2. A mobile station according to claim 1 wherein the mobile station is operable to provide to its user a message indicating that a call is waiting and optionally indicating the identity of the terminal and/or user that sent the message.

3. A mobile station according to any one of the preceding claims and which is operable to receive a user instruction indicating acceptance of the call request and in response to suspend or to release the current call.

4. A mobile station according to claim 3 and which is operable to send a message to the further terminal indicating acceptance of the request.

5. A mobile station according to claim 3 and which is operable as a master station in a current call to suspend the current call and to issue a message reserving the current call.

6. A mobile station (MS1) according to any one of the preceding claims 2 to 5 and wherein the mobile station is operable to initiate a call with the further terminal (MS3) on the second channel B.

7. A mobile station according to claim 6, which is operable to switch to the second channel B in response to sending an acceptance response message to the further terminal.

8. A mobile station according to claim 6 or claim 7 and which is operable to resume its call on the first channel A after ending the call with the further terminal on the second channel B.

9. A mobile station according to any one of the preceding claims and which is operable to provide to the user a message indicating that the user is requested to call one or more other terminals from which call request messages have been detected by the mobile station.

10. A mobile station according to any one of the preceding claims and which is operable to return to the further terminal (MS3) a further data message indicating that the further terminal should call another specified wireless terminal (MS6) or group of terminals.

11. A mobile station according to any one of the preceding claims and which (MS3) is operable to send to one (MS1) of a plurality of mobile wireless terminals participating together in a current DMO call a message in DMO using a DMO channel not currently in use, wherein the channel A of the current call and the DMO channel B on which the message is sent comprise different slots of a timing sequence on the same carrier frequency.

12. A mobile station according to claim 11 and which is operable to detect the DMO channel A and/or time slots currently in use in the call.

13. A mobile station according to claim 12 and which is operable to detect that another DMO channel B and/or other time slots are free.

14. A mobile station (MS3) according to any one of the preceding claims and which is operable to send a message in DMO to one (MS1) of a plurality of mobile wireless terminals currently in a DMO call together and to receive from the terminal (MS1) a response message indicating that the mobile station (MS3) should call another specified wireless terminal (MS6) or group of terminals and wherein the mobile station (MS3) is operable to provide a message to its user indicating the identified further terminal or terminals.

15. A mobile station according to claim 14 and which is operable to prevent a call to the further terminal or terminals by receipt of an instruction from the user.

16. A mobile station according to claim 14 or claim 15 and which is operable to call the further terminal (MS6) automatically in response to receipt of the response message indicating that the mobile station should call the other specified wireless terminal or group of terminals.

17. A mobile station according to any one of the preceding claims and which is operable according to TETRA standard procedures.

18. A method of operation by a plurality of mobile stations for conducting wireless communications with each other in a DMO including a first mobile station (MS3) not currently involved in a DMO call sending to a second mobile station (MS1) participating in a DMO call with one or more other mobile stations on a DMO channel a data message requesting the second mobile station to participate in a DMO call with the first mobile station, **characterised in that** the second mobile station (MS1) is participating in a call on a first DMO channel A comprising pre-defined time slots of a timing sequence on a DMO carrier frequency, the first mobile station (MS3) sends to the second mobile station (MS1) a data message on a second DMO channel B comprising other time slots of the timing sequence on the same carrier frequency and the second mobile station monitors the second channel whilst it is participating in the call and receives and recognises the data message.

19. A method according to claim 18 wherein the first mobile station receives from the second mobile station a response message indicating that the first mobile station should call another specified wireless terminal (MS6) or group of terminals and wherein the first mobile station provides a message to its user indicating the identified further terminal or terminals.

20. A method according to claim 19 and wherein the first mobile station receives an instruction from a user and in response operates to prevent a call to the further terminal or terminals taking place.

21. A method according to claim 19 or claim 20 and wherein the first mobile station operates to call the further terminal automatically in response to receipt of the response message indicating that the first mobile station should call the other specified wireless terminal or group of terminals.

22. A method according to any one of the preceding claims 18 to 21 wherein the first and second mobile stations operate according to TETRA standard procedures.

## Patentansprüche

1. Mobilstation (MS1) zum Leiten von drahtlosen DMO-Kommunikationen (DMO = Direktbetriebsart) mit anderen drahtlosen Endgeräten, die, wenn sie an einem Anruf unter Verwendung eines DMO-Kanals mit einer oder mehreren anderen Mobilstationen (MS2) teilnimmt, betreibbar ist, um Überwachung bezüglich einer Nachricht durchzuführen, die durch ein weiteres drahtloses Endgerät (MS3), das nicht an dem Anruf teilnimmt, an die Mobilstation gesendet wird, wobei die Mobilstation (MS1) aufgefordert wird, an einem DMO-Anruf mit dem weiteren drahtlosen Endgerät (MS3) teilzunehmen, **dadurch gekennzeichnet, dass** die Mobilstation (MS1) betreibbar ist, um an einem Anruf auf einem ersten DMO-Kanal A teilzunehmen, der vordefinierte Zeitschlitze einer Timingsequenz auf einer DMO-Trägerfrequenz umfasst, und um einen zweiten DMO-Kanal B, der weitere Zeitschlitze der Timingsequenz auf der selben Trägerfrequenz umfasst, auf eine Datennachricht zu überwachen, die durch das weitere drahtlose Endgerät (MS3) durch eine DMO-Kommunikation an die Mobilstation (MS1) gesendet wird, und, wo eine solche Datennachricht erfasst wird, die Nachricht zu empfangen und zu erkennen.

2. Mobilstation gemäß Anspruch 1, wobei die Mobilstation betreibbar ist, um ihrem Anwender eine Nachricht zur Verfügung zu stellen, die anzeigt, dass ein Anruf wartet, und optional die Identität des Endgerätes und/oder Anwenders anzeigt, das beziehungsweise der die Nachricht gesendet hat.

3. Mobilstation gemäß einem der vorangehenden Ansprüche, die betreibbar ist, um eine Anwenderanweisung zu empfangen, die eine Annahme der Anrufaufforderung anzeigt, und in Reaktion darauf den aktuellen Anruf zu unterdrücken oder freizugeben.

4. Mobilstation gemäß Anspruch 3, die betreibbar ist, um eine Nachricht, die eine Annahme zu der Aufforderung anzeigt, an ein anderes Endgerät zu senden.

5. Mobilstation gemäß Anspruch 3, die als eine Hauptstation in einem aktuellen Anruf betreibbar ist, um den aktuellen Anruf zu unterdrücken und eine Nachricht auszugeben, die den aktuellen Anruf reserviert.

6. Mobilstation (MS1) gemäß einem der vorangehenden Ansprüche 2 bis 5, wobei die Mobilstation betreibbar ist, um einen Anruf mit dem weiteren Endgerät (MS3) auf dem zweiten Kanal B zu initiieren.

7. Mobilstation gemäß Anspruch 6, die betreibbar ist, um in Reaktion auf ein Senden einer Annahmeantwortnachricht an das weitere Endgerät auf den zweiten Kanal B umzuschalten.

8. Mobilstation gemäß Anspruch 6 oder Anspruch 7, die betreibbar ist, um ihren Anruf auf dem ersten Kanal A fortzusetzen, nachdem sie den Anruf mit dem weiteren Endgerät auf dem zweiten Kanal B beendet hat.

9. Mobilstation gemäß einem der vorangehenden Ansprüche, die betreibbar ist, um dem Anwender eine Nachricht zur Verfügung zu stellen, die anzeigt, dass der Anwender aufgefordert wird, ein oder mehrere andere Endgeräte anzurufen, von denen Anrufaufforderungsnachrichten durch die Mobilstation erfasst worden sind.

10. Mobilstation gemäß einem der vorangehenden Ansprüche, die betreibbar ist, um eine weitere Datennachricht an das weitere Endgerät (MS3) zurückzusenden, die anzeigt, dass das weitere Endgerät ein anderes spezifiziertes drahtloses Endgerät (MS6) oder eine andere spezifizierte Gruppe von Endgeräten anrufen soll.

11. Mobilstation gemäß einem der vorangehenden Ansprüche, die (MS3) betreibbar ist, um unter Verwendung eines DMO-Kanals, der aktuell nicht verwendet wird, eine Nachricht in einer DMO an ein Endgerät (MS1) einer Mehrzahl von mobilen drahtlosen Endgeräten, die gemeinsam an einem aktuellen DMO-Anruf teilnehmen, zu senden, wobei der Kanal A des aktuellen Anrufs und der Kanal B, auf dem die Nachricht gesendet wird, unterschiedliche Schlitze einer Timingsequenz auf der selben Trägerfrequenz umfassen.

12. Mobilstation gemäß Anspruch 11, die betreibbar ist, um den DMO-Kanal A und/oder die Zeitschlitze zu erfassen, die aktuell in dem Anruf verwendet werden.

13. Mobilstation gemäß Anspruch 12, die betreibbar ist, um zu erfassen, dass ein anderer DMO-Kanal B und/oder andere Zeitschlitze frei sind.

14. Mobilstation (MS3) gemäß einem der vorangehenden Ansprüche, die betreibbar ist, um eine Nachricht in einer DMO an ein Endgerät (MS1) einer Mehrzahl von mobilen drahtlosen Endgeräten zu senden, die sich gerade zusammen in einem DMO-Anruf befinden, und um von dem Endgerät (MS1) eine Antwortnachricht zu empfangen, die anzeigt, dass die Mobilstation (MS3) ein anderes spezifiziertes drahtloses Endgerät (MS6) oder eine andere spezifizierte Gruppe von Endgeräten anrufen soll, und wobei die Mobilstation (MS3) betreibbar ist, um ihrem Anwender eine Nachricht zur Verfügung zu stellen, die das oder die identifizierten weiteren Endgeräte anzeigt.

15. Mobilstation gemäß Anspruch 14, die betreibbar ist, um einen Anruf an das oder die weiteren Endgeräte durch den Empfang einer Anweisung von dem Anwender zu verhindern.

16. Mobilstation gemäß Anspruch 14 oder Anspruch 15, die betreibbar ist, um das weitere Endgerät (MS6) in Reaktion auf einen Empfang der Antwortnachricht, die anzeigt, dass die Mobilstation das andere spezifizierte drahtlose Endgerät oder die andere spezifizierte Gruppe von Endgeräten anrufen soll, automatisch anzurufen.

17. Mobilstation gemäß einem der vorangehenden Ansprüche, die gemäß TETRA-Standard-Verfahren betreibbar ist.

18. Betriebsverfahren unter Verwendung einer Mehrzahl von Mobilstationen zum Leiten von wechselseitigen drahtlosen Kommunikationen in einer DMO, die eine erste Mobilstation (MS3) umfassen, die gerade nicht an einem DMO-Anruf beteiligt ist und die an eine zweite Mobilstation (MS1), die an einem DMO-Anruf mit einer oder mehreren anderen Mobilstationen auf einem DMO-Kanal teilnimmt, eine Datennachricht sendet, die die zweite Mobilstation auffordert, an einem DMO-Anruf mit der ersten Mobilstation teilzunehmen, **dadurch gekennzeichnet, dass** die zweite Mobilstation (MS1) an einem Anruf auf einem ersten DMO-Kanal A teilnimmt, der vordefinierte Zeitschlitze einer Timingsequenz auf einer DMO-Trägerfrequenz umfasst, dass die erste Mobilstation (MS3) an die zweite Mobilstation (MS1) eine Datennachricht auf einem zweiten DMO-Kanal B sendet, der andere Zeitschlitze der Timingsequenz auf der selben Trägerfrequenz umfasst, und dass die zweite Mobilstation den zweiten Kanal überwacht, während sie an dem Anruf teilnimmt, und die Datennachricht empfängt und erkennt.

19. Verfahren gemäß Anspruch 18, wobei die erste Mobilstation von der zweiten Mobilstation eine Antwortnachricht empfängt, die anzeigt, dass die erste Mobilstation ein anderes spezifiziertes drahtloses Endgerät (MS6) oder eine andere spezifizierte Gruppe von Endgeräten anrufen soll; und wobei die erste Mobilstation ihrem Anwender eine Nachricht zur Verfügung stellt, die das oder die identifizierten weiteren Endgeräte anzeigt.

20. Verfahren gemäß Anspruch 19, wobei die erste Mobilstation eine Anweisung von einem Anwender empfängt und in Reaktion darauf arbeitet, um zu verhindern, dass ein Anruf an das oder die weiteren Endgeräte stattfindet.

21. Verfahren gemäß Anspruch 19 oder Anspruch 20, wobei die erste Mobilstation arbeitet, um das weitere Endgerät in Reaktion auf einen Empfang der Antwortnachricht, die anzeigt, dass die erste Mobilstation das andere spezifizierte drahtlose Endgerät oder die Gruppe von Endgeräten anrufen soll, automatisch anzurufen.

22. Verfahren gemäß einem der vorangehenden Ansprüche 18 bis 21, wobei die erste und die zweite Mobilstation gemäß TETRA-Standard-Verfahren arbeiten.

## Revendications

1. Station mobile (MS1) pour la réalisation de communications sans fil en mode DMO, mode de fonctionnement direct, avec d'autres terminaux sans fil, et qui a la capacité, lorsqu'elle participe à une communication sur un canal DMO avec une ou plusieurs autres stations mobiles (MS2), de surveiller l'arrivée d'un message envoyé à la station mobile par un terminal sans fil supplémentaire (MS3) qui ne participe pas à la communication, et demandant à la station mobile (MS1) de participer à une communication DMO avec le terminal sans fil supplémentaire (MS3), **caractérisée en ce que** la station mobile (MS1) a la capacité de participer à une communication sur un premier canal DMO A comprenant des tranches de temps prédéfinies d'une séquence de synchronisation sur une fréquence porteuse DMO, et de surveiller un deuxième canal DMO B comprenant d'autres tranches de temps de la séquence de synchronisation sur la même fréquence porteuse, pour l'arrivée d'un message de données envoyé par une communication DMO à la station mobile (MS1) par le terminal mobile supplémentaire (MD3) et, lorsque ce message de données est détecté, de recevoir et reconnaître le message.

2. Station mobile selon la revendication 1, dans laquelle la station mobile a la capacité de fournir à son utilisateur un message indiquant qu'une communication est en attente et d'indiquer facultativement l'identité du terminal et/ou de l'utilisateur qui a envoyé le message.

3. Station mobile selon l'une quelconque des revendications précédentes, et qui a la capacité de recevoir une instruction de l'utilisateur indiquant l'acceptation de la demande de communication et, en réponse, de suspendre ou libérer la communication en cours.

4. Station mobile selon la revendication 3, et qui a la capacité d'envoyer au terminal supplémentaire un message indiquant l'acceptation de la demande.

5. Station mobile selon la revendication 3, et qui a la capacité de fonctionner en tant que station maîtresse dans une communication en cours pour suspendre la communication en cours et pour émettre un message réservant la communication en cours.

6. Station mobile (MS1) selon l'une quelconque des revendications précédentes 2 à 5, et dans laquelle la station mobile a la capacité de démarrer une communication avec le terminal supplémentaire (MS3) sur le deuxième canal B.

7. Station mobile selon la revendication 6, et qui a la capacité de commuter sur le deuxième canal B en réponse à l'envoi d'un message de réponse d'acceptation au terminal supplémentaire.

8. Station mobile selon la revendication 6 ou la revendication 7, et qui a la capacité de reprendre sa communication sur le premier canal A après la fin de la communication avec le terminal supplémentaire sur le deuxième canal B.

9. Station mobile selon l'une quelconque des revendications précédentes, et qui a la capacité de fournir à l'utilisateur un message indiquant qu'il est demandé à l'utilisateur d'appeler un ou plusieurs autres terminaux en provenance desquels des messages de demande de communication ont été détectés par la station mobile.

10. Station mobile selon l'une quelconque des revendications précédentes, et qui a la capacité de renvoyer au terminal supplémentaire (MS3) un message de données supplémentaire indiquant que le terminal supplémentaire devrait appeler un autre terminal sans fil (MS6) ou groupe de terminaux spécifié.

11. Station mobile selon l'une quelconque des revendications précédentes, et qui (MS3) a la capacité d'envoyer, à l'un (MS1) d'une pluralité de terminaux sans fil mobiles participant ensemble à une communication DMO en cours, un message en mode DMO sur un canal DMO qui n'est pas en cours d'utilisation, où le canal A de la communication en cours et le canal DMO B sur lequel le message est envoyé comprennent des tranches de temps différentes d'une séquence de synchronisation sur la même fréquence porteuse.

12. Station mobile selon la revendication 11, et qui a la capacité de détecter le canal DMO A et/ou les tranches de temps en cours d'utilisation dans la communication.

13. Station mobile selon la revendication 12, et qui a la capacité de détecter qu'un autre canal DMO B et/ou d'autres tranches de temps sont libres.

14. Station mobile (MS3) selon l'une quelconque des revendications précédentes, et qui a la capacité d'envoyer un message en mode DMO à l'un (MS1) d'une pluralité de terminaux sans fil mobiles en cours de communication DMO ensemble, et de recevoir en provenance du terminal (MS1) un message de réponse indiquant que la station mobile (MS3) devrait appeler un autre terminal sans fil (MS6) ou groupe de terminaux spécifié, la station mobile (MS3) ayant également la capacité de fournir à son utilisateur un message indiquant le ou les terminaux supplémentaires identifiés.

15. Station mobile selon la revendication 14, et qui a la capacité d'empêcher une communication avec le ou les terminaux supplémentaires en réponse à la réception d'une instruction de l'utilisateur.

16. Station mobile selon la revendication 14 ou la revendication 15, et qui a la capacité d'appeler automatiquement le terminal supplémentaire (MS6) en réponse à la réception du message de réponse indiquant que la station mobile devrait appeler l'autre terminal sans fil ou groupe de terminaux spécifié.

17. Station mobile selon l'une quelconque des revendications précédentes, et qui a la capacité de fonctionner selon les procédures de la norme TETRA.

18. Mode opératoire utilisé par une pluralité de stations mobiles pour la réalisation de communications sans fil entre elles en mode DMO, incluant le fait qu'une première station mobile (MS3) non actuellement impliquée dans une communication DMO, envoie, à une deuxième station mobile (MS1) participant à une communication DMO avec une ou plusieurs autres stations mobiles sur un canal DMO, un message de données demandant à la deuxième station mobile de participer à une communication DMO avec la première station mobile, **caractérisé en ce que** la deuxième station mobile (MS1) est en cours de participation à une communication sur un premier canal DMO A comprenant des tranches de temps prédéfinies d'une séquence de synchronisation sur une fréquence porteuse DMO ; la première station mobile (MS3) envoie à la deuxième station mobile (MS1) un message de données sur un deuxième canal DMO B comprenant d'autres tranches de temps de la séquence de synchronisation sur la même fréquence porteuse ; et la deuxième station mobile surveille le deuxième canal tandis qu'elle participe à la communication, et reçoit et reconnaît le message de données.

19. Mode opératoire selon la revendication 18, et dans lequel la première station mobile reçoit de la deuxième station mobile un message de réponse indiquant que la première station mobile devrait appeler un autre terminal sans fil (MS6) ou groupe de terminaux spécifié, et dans lequel la première station mobile fournit à son utilisateur un message indiquant le ou les terminaux supplémentaires identifiés.

20. Mode opératoire selon la revendication 19, et dans lequel la première station mobile reçoit une instruction de l'utilisateur et, en réponse, agit de façon à empêcher qu'un appel du ou des terminaux supplémentaires soit effectué.

21. Mode opératoire selon la revendication 19 ou la revendication 20, et dans lequel la première station mobile agit de façon à appeler automatiquement le terminal supplémentaire en réponse à la réception du message de réponse indiquant que la première station mobile devrait appeler l'autre terminal sans fil ou groupe de terminaux spécifié.

22. Mode opératoire selon l'une quelconque des revendications précédentes 18 à 21, et dans lequel les première et deuxième stations mobiles fonctionnent selon les procédures de la norme TETRA.
